# EUROPEAN PATENT APPLICATION

(11) **EP 2 037 136 A2**
(43) Date of publication of application: **18.03.2009**
(21) Application number: 08104756.5
(22) Date of filing: 15.07.2008
(51) Int. Cl.: F16C 29/02, F16C 32/06

(54) **Fluid bearing structure and assembly method for fluid bearing structure**

(30) Priority: 11.09.2007 JP 2007235639
(71) Applicant: Fanuc Ltd, Yamanashi 401-0597 (JP)
(72) Inventor: Kawai, Tomohiko, Oshino-mura, Minamitsuru-gun, Yamanashi 401-0597 (JP); Ebihara, Kenzo, Oshino-mura, Minamitsuru-gun, Yamanashi 401-0597 (JP)
(74) Representative: Thum, Bernhard

(57) **Abstract**

Materials with different thermal expansion coefficients are selected individually for a bearing guide and a slider that constitute a fluid bearing. The guide and the slider are combined in close contact with each other (i.e., with a zero bearing clearance between the two) in a temperature environment different from a temperature at which the fluid bearing is actually used. In consequence, the bearing clearance at the operating temperature can be adjusted based on a difference from the temperature for the fluid bearing assembly.

## Description

### BACKGROUND OF THE INVENTION

### Field of the Invention

The present invention relates to a fluid bearing structure and an assembly method for the fluid bearing structure, and more particularly, to a fluid bearing structure suited for a bearing used in a device that requires nano-order positioning accuracy, such as an ultra-precision working machine or an ultra-precision, three-dimensional measuring device, and an assembly method for the fluid bearing structure.

### Description of the Related Art

In a device that requires nano-order positioning accuracy, such as an ultra-precision working machine or an ultra-precision, three-dimensional measuring device, an air bearing or some other non-contact bearing is used to eliminate the influence of friction during movement of a movable member. The air bearing forms a non-contact bearing that feeds compressed air into a fine clearance of several microns.

The stiffness of a fluid bearing, such as the air bearing, depends on the size of the bearing clearance. The narrower the bearing clearance, the higher the bearing stiffness is. Therefore, the width of the bearing clearance must be restricted to several microns in order to ensure high bearing stiffness and maintain a non-contact state. If the bearing clearance is too narrow, the bearing is easily caused to contact by an external force, so that its load capacity is reduced. If the bearing clearance is too wide, on the other hand, satisfactory bearing stiffness cannot be obtained. Thus, the bearing clearance of the fluid bearing must be controlled to be optimum.

Accordingly, components that constitute the fluid bearing should be worked so that the width of the bearing clearance is several microns. In order to achieve the purpose of working with the bearing clearance of several microns, working and measurement of the component dimensions must be executed repeatedly. Therefore, it would take very much time to work the components by machining only. The bearing clearance cannot be adjusted after the components are worked.

Disclosed in Japanese Patent Application Laid-Open No. 2006-83939 is a technique that enables adjustment of an air bearing clearance for a linear-motion shaft during assembly of a fluid bearing structure, thereby reducing the burden of machining of components that constitute a bearing. According to the fluid bearing structure disclosed in this patent document, the bearing clearance of the fluid bearing can be adjusted by regulating the positional relationships between bolts and bolt holes for connecting and fixing plate members that constitute the bearing structure. Thus, the components of the fluid bearing can be worked more easily, so that the working time can be shortened.

Assembling the fluid bearing structure disclosed in the patent document described above, however, requires a fine adjustment based on measurement of an fluid bearing clearance on each plane using an indicator. According to this assembly method, the operation for adjusting the bearing clearance takes much time, and in addition, it is very difficult to adjust the entire bearing clearance uniformly in assembling the fluid bearing.

### SUMMARY OF THE INVENTION

The object of the present invention is to provide a fluid bearing structure and an assembly method therefor, by which an operator can always assemble a fluid bearing with an accurate bearing clearance without performing a complicated adjustment operation.

A fluid bearing structure according to the present invention comprises a bearing guide and a slider. The slider includes four square plate members each having a flat surface and end surfaces perpendicular thereto. Each of the plate members has two or more bolt holes formed near and along one side thereof and tapped holes formed in an end surface thereof on the other side opposite to the one side, corresponding to the bolt holes, individually. The four plate members are coupled together to form a box-like structure by bolts which are passed individually through the bolt holes in one of the plate members so that the respective distal ends of the bolts are threadedly engaged with the tapped holes in another plate member. The bearing guide is passed through the respective inner surfaces of the four plate members in the shape of the box-like structure which serve as bearing surfaces of a fluid bearing. In this fluid bearing structure, the bearing guide and the slider are formed individually of materials with different thermal expansion coefficients, and the fluid bearing structure is assembled with the four plate members individually in close contact with the bearing guide, that is, with a bearing clearance between the guide and the slider reduced to zero, at a temperature different from a temperature at which the fluid bearing is used, thereby giving the fluid bearing structure thus assembled a bearing clearance of a size corresponding to a temperature difference between the environmental temperature at which the fluid bearing is used and the temperature at which the fluid bearing is assembled.

The diameter of the bolt holes may be made larger than that of the bolts to be engaged with the tapped holes so that positional relationships between the bolt holes in the one plate member and the tapped holes in the other plate member are adjustable, whereby the fluid bearing structure is configured to be assembled with the four plate members individually in close contact with the bearing guide.

The bearing surfaces of the fluid bearing may be configured so that a cross section perpendicular to a driving direction is shaped like a near square or parts of a near square.

A method for assembling a fluid bearing structure which includes a bearing guide and a slider, according to the present invention, comprises: a step of selecting materials with different thermal expansion coefficients for the bearing guide and the slider and bringing the slider into close contact with the bearing guide in a first temperature environment, thereby assembling the fluid bearing structure with a zero bearing clearance between the guide and the slider; and a step of placing the assembled fluid bearing structure in a second temperature environment different from the first temperature environment, thereby adjusting the resulting bearing clearance to a size based on a difference between the first and second temperatures, and using the fluid bearing structure with the adjusted bearing clearance in the second temperature environment.

An adjustment method for a bearing clearance of a fluid bearing according to the present invention comprises: bringing a slider with a predetermined shape, size, and material into close contact with a bearing guide with a predetermined shape, size, and material in a set temperature environment, thereby assembling a fluid bearing structure with a zero bearing clearance between the bearing guide and the slider, and then obtaining, as functions of temperature differences from the set temperature, the respective sizes of bearing clearances generated when the assembled fluid bearing structure is placed in various temperature environments different from the set temperature; and actually using the fluid bearing structure in an environment of temperature having a temperature difference corresponding to a desired bearing clearance, from the set temperature, with reference to the obtained functions, in order to obtain the desired clearance, or assembling the fluid bearing structure with the zero bearing clearance in an environment of temperature having a temperature difference corresponding to a desired bearing clearance, from the temperature at which the fluid bearing structure is to be used.

According to the present invention, the bearing clearance of the fluid bearing is settled depending on the difference in thermal expansion coefficient between the guide and the slider that constitute the fluid bearing and a set temperature of a temperature-controlled room. Therefore, an operator need not adjust the bearing clearance, so that an accurate bearing clearance can be obtained at all times.

A working machine or a measuring device, such as a high-precision, three-dimensional measuring device that uses a fluid bearing, generally operates in a temperature-controlled room. Since the room temperature is constant, therefore, the fluid bearing clearance cannot be changed by thermal expansion of the component materials.

### BRIEF DESCRIPTION OF THE DRAWINGS

The above and other objects and features of the present invention will be obvious from the ensuing description of embodiments with reference to the accompanying drawings, in which:
FIG. 1A is a perspective view showing one embodiment of a fluid bearing structure according to the invention;
FIG. 1B is a perspective view of a plate member that constitutes a box-like slider used in the fluid bearing structure of FIG. 1A;
FIG. 2 is a top view of the fluid bearing structure of FIG. 1A;
FIG. 3 is a plan view for illustrating how the fluid bearing structure is assembled with a flat surface of the plate member (having a thermal expansion coefficient different from that of a bearing guide) constituting the slider in close contact with the bearing guide (i.e., with a zero bearing clearance);
FIG. 4 is a plan view showing how a bearing clearance d of a predetermined size is formed between the bearing guide and the slider when the fluid bearing structure shown in FIG. 3 is set in a temperature environment different from its operating temperature;
FIG. 5A is a view showing a first example of a cross sectional shape of the bearing guide constituting the fluid bearing structure of FIG. 1A;
FIG. 5B is a view showing a second example of the cross sectional shape of the bearing guide constituting the fluid bearing structure of FIG. 1A;
FIG. 6A is a diagram showing how the bearing clearance varies depending on the difference between the temperature at which the fluid bearing structure of FIG. 1A is assembled and the temperature (lower than the temperature for assembly) at which the fluid bearing structure is used;
FIG. 6B is a diagram showing how the bearing clearance varies depending on the difference between the temperature at which the fluid bearing structure of FIG. 1A is assembled and the temperature (higher than the temperature for assembly) at which the fluid bearing structure is used; and
FIGS. 7A, 7B and 7C are views showing how the diameter of a bolt hole in the plate member that constitutes a slider is made larger than that of a bolt to be passed through the bolt hole, in which FIG. 7A shows a case where the bolt hole and the bolt are concentric, FIG. 7B shows a case where the center of the bolt hole is biased on one side from that of the bolt, and FIG. 7C shows a case where the center of the bolt hole is biased on the other side from that of the bolt.

### DETAILED DESCRIPTION OF THE PREFERRED EMBODIMENTS

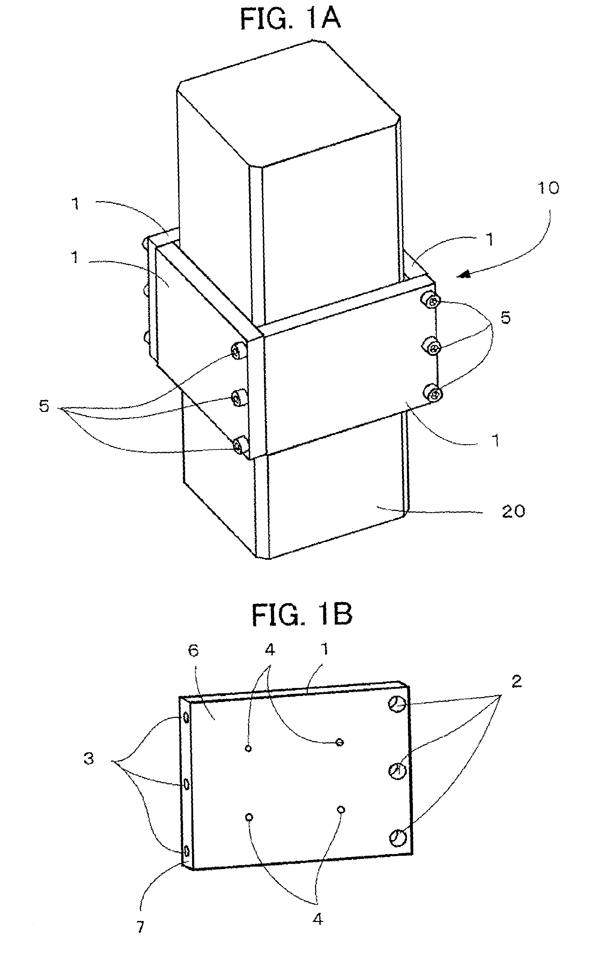

FIG. 1A is a view illustrating one embodiment of a fluid bearing structure according to the present invention, in which numeral 20 denotes a bearing guide that is fixed to a machine or the like and serves to guide a fluid bearing. A box-like slider 10 is formed surrounding the bearing guide 20.

FIG. 1B is a perspective view of a plate member 1 that constitutes the box-like slider 10. The plate member 1 has a flat surface 6 and end surfaces 7 perpendicular to it. A plurality of (three in this embodiment) bolt holes 2 are formed along one end side portion of the flat surface 6 of the plate member 1. Further, a plurality of (three in this embodiment) tapped holes 3 are formed in the end surface 7 on that side which faces the end portion at which the bolt holes 2 are formed, in positions corresponding individually to bolt holes 2 of another plate member 1. Furthermore, the flat surface 6 of the plate member 1 is provided with a plurality of fluid discharge ports 4 (four of which are shown in FIG. 1B).

Four plate members 1 (one of which is shown in FIG. 1B) are combined to form the box-like slider 10. The end surface 7 of one (first) plate member 1 is engaged with the flat surface 6 of another (second) plate member 1. The tapped holes 3 in the end surface 7 of the first plate member 1 are aligned individually with the bolt holes 2 of the second plate member 1, and bolts 5 are passed through the bolt holes 2 of the second plate member 1 and threadedly fitted into the tapped holes 3 of the first plate member 1. By doing this, the two (first and second) plate members 1 can be coupled together. The four plate members 1 are coupled in like manner to form the box-like slider 10.

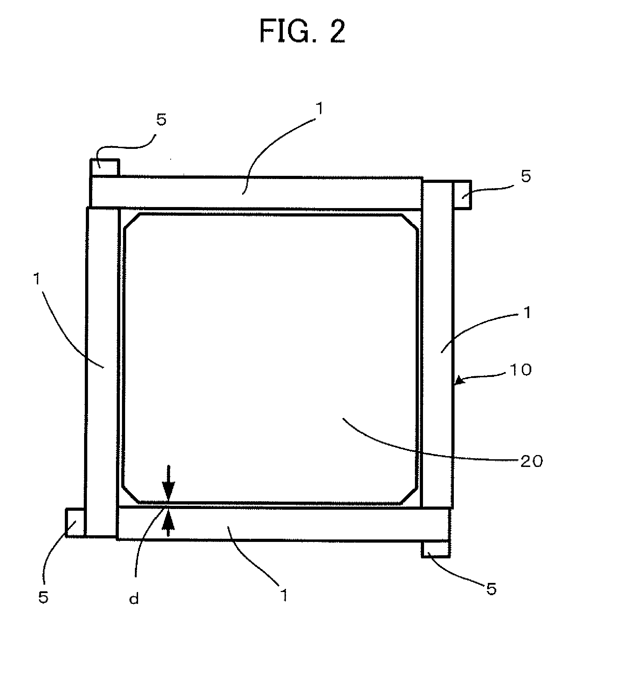

FIG. 2 is a top view of the fluid bearing structure shown in FIG. 1A. In an operating temperature environment, such as a temperature-controlled room, in which a working machine or a measuring device to which the bearing guide 20 is fixed is operated, a bearing clearance d is defined between the guide 20 and the slider 10, as shown in FIG. 2. The fluid bearing is formed by injecting a compressed fluid, such as air, into the bearing clearance d.

The working machine or the measuring device, e.g., a high-precision, three-dimensional measuring device that uses an air bearing, generally operates in a temperature-controlled room. Since the room temperature is constant, therefore, the bearing clearance *d* of the air bearing (fluid bearing) cannot be changed by thermal expansion of the materials of components that constitute the air bearing.

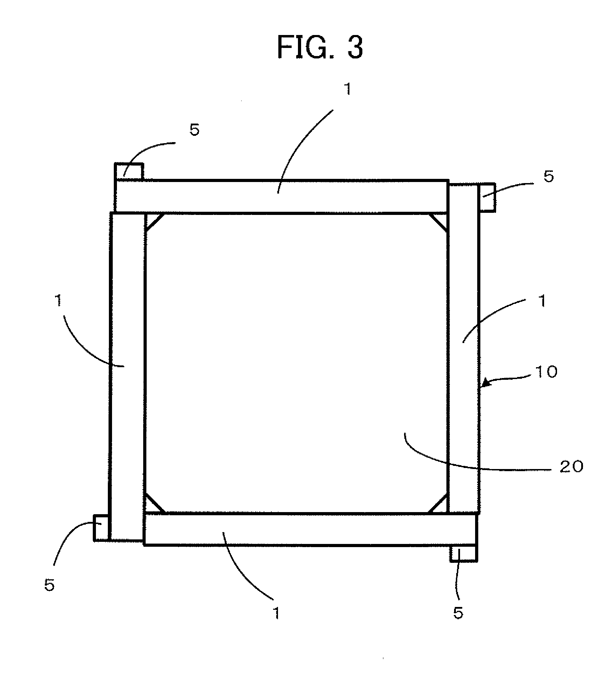

FIG. 3 shows an example of a fluid bearing in which the thermal expansion coefficient of the bearing guide 20 is differentiated from that of the slider 10 in order to optimize the bearing clearance d of FIG. 2 in the working environment for the measuring device or the working machine.

The operating temperature is set to 22°C for the fluid bearing shown in FIG. 3, and the fluid bearing is assembled by bringing the flat surface 6 of the plate member 1, which constitutes the slider 10, into close contact with the bearing guide 20 so that the bearing clearance d is zero at a temperature of 30°C at which the fluid bearing is to be assembled. Since the bearing clearance d can be reduced to zero by only bringing the flat surface 6 of the plate member 1 into close contact with the bearing guide 20, an adjustment operation that is required by the prior art technique is not essential.

In the embodiment shown in FIG. 3, the cross section of the bearing guide 20 has the shape of a square measuring 100 mm by 100 mm. The linear thermal expansion coefficient of the slider 10 is adjusted to 10 × 10⁻⁶/°C, and that of the bearing guide 20 to 20 × 10⁻⁶/°C. To attain this, stainless steel with a low linear thermal expansion coefficient, for example, is used for the slider 10, and duralumin with a high linear thermal expansion coefficient is used for the bearing guide 20.

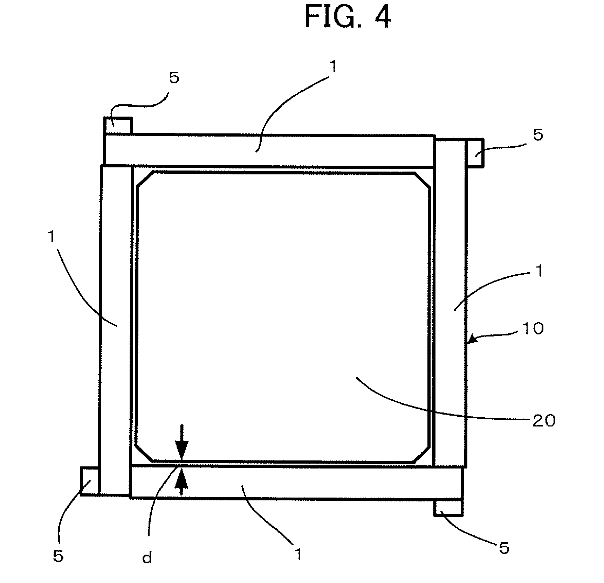

FIG. 4 shows a state in which the fluid bearing structure that is composed of the bearing guide 20 and the slider 10 with different thermal expansion coefficients shown in FIG. 3 is set at the operating temperature (22°C) at which the measuring device or the working machine is operated.

The bearing guide 20 and the slider 10 is contracted by a temperature difference of 8°C between the assembly temperature of 30°C and the operating temperature of 22°C, and a difference of about 8 µm is caused in the cross-sectional size of the bearing portion by the difference between the respective thermal expansion coefficients of the bearing guide 20 and the slider 10. A bearing clearance of 4 µm is defined on each side if clearances on the opposite sides of the bearing are regarded as equal. Since the cross section of the bearing guide 20 has the shape of the square measuring 100 mm by 100 mm, moreover, dimensional contraction is uniformly caused by the difference in the thermal expansion coefficient, so that uniform bearing clearances can be formed. In consequence, the plate members 1 that constitute the slider 10 are parallel to the surfaces of the bearing guide 20, individually, so that high-accuracy bearing clearances can be formed without requiring any special external adjustment.

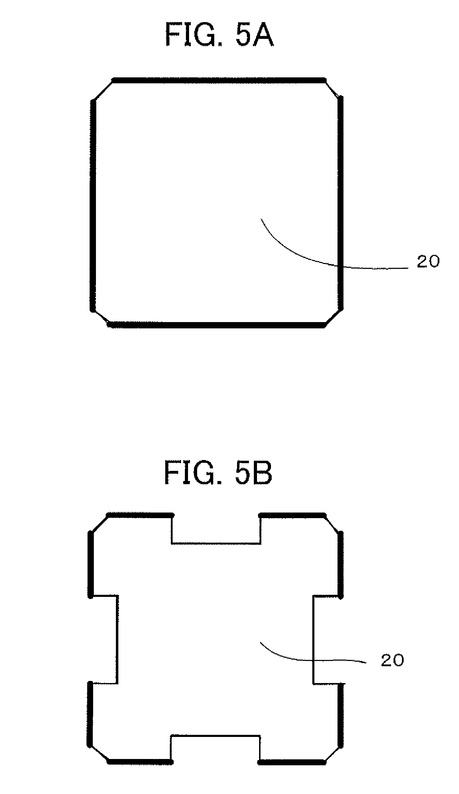

FIGS. 5A and 5B are views showing first and second examples, respectively, of the cross-sectional shape of the bearing guide 20.

FIG. 5A shows an example of the bearing guide 20 that has a cross section in the shape of a chamfered square (near square). A space portion that is defined by the chamfered bearing guide 20 and the slider 10 is provided for ventilation. Since the bearing guide 20 has the substantially square cross section, size changes caused by linear expansion are uniform, so that uniform bearing clearances can be obtained.

FIG. 5B shows an example in which the bearing guide 20 with a square cross section is formed with grooves individually on its sides. The grooves extend in the guiding direction of the guide 20. Also in this case, the cross section of the guide 20 is partially square. In FIG. 5B, thick-line portions are parts of the square.

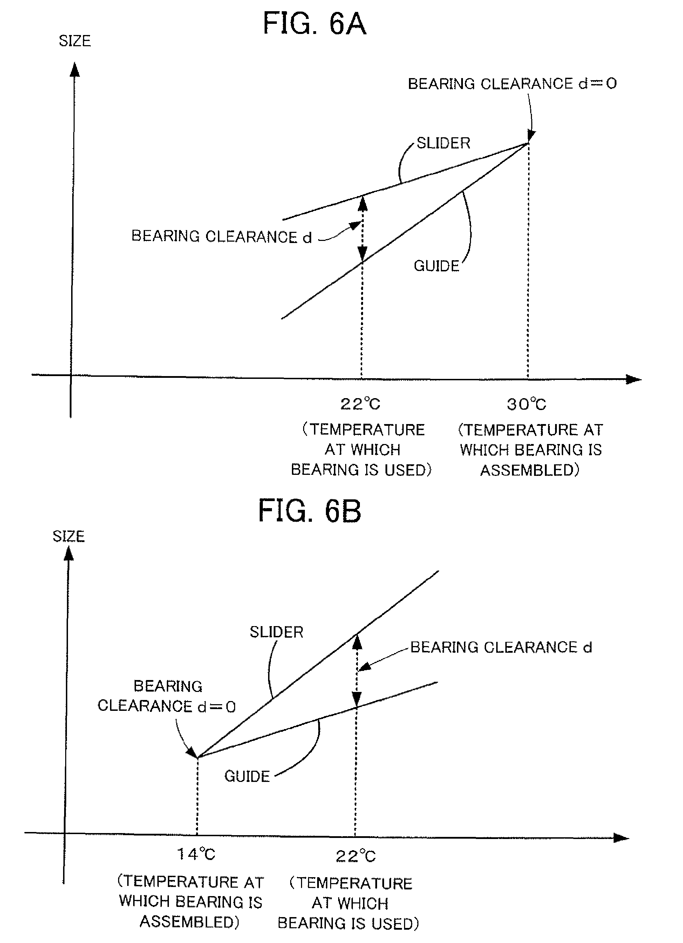

FIGS. 6A and 6B are diagrams showing differences between bearing clearances for a temperature at which the fluid bearing is assembled and a temperature at which the fluid bearing is used.

FIG. 6A shows an example in which a set temperature at which the fluid bearing is to be assembled is higher than a temperature at which the bearing is used. The temperature at which the fluid bearing is to be assembled is set to 30°C and the temperature at which the bearing is used is set to 22°C. In order to realize an optimum bearing clearance d at a temperature at which the fluid bearing is used, a material with large size variations (or high thermal expansion coefficient) is selected for the bearing guide 20, and a material with small size variations (or low thermal expansion coefficient) for the slider 10.

In FIG. 6B, the temperature at which the bearing is assembled is set to 14°C and the temperature at which the fluid bearing is used is set to 22°C. In order to obtain an optimum bearing clearance d at a temperature at which the fluid bearing is used, a material which tends to cause a large change in dimension (or which has a low thermal expansion coefficient) is selected for the bearing guide 20, and a material which tends to cause a small change in dimension (or which has a high thermal expansion coefficient) is selected for the slider 10.

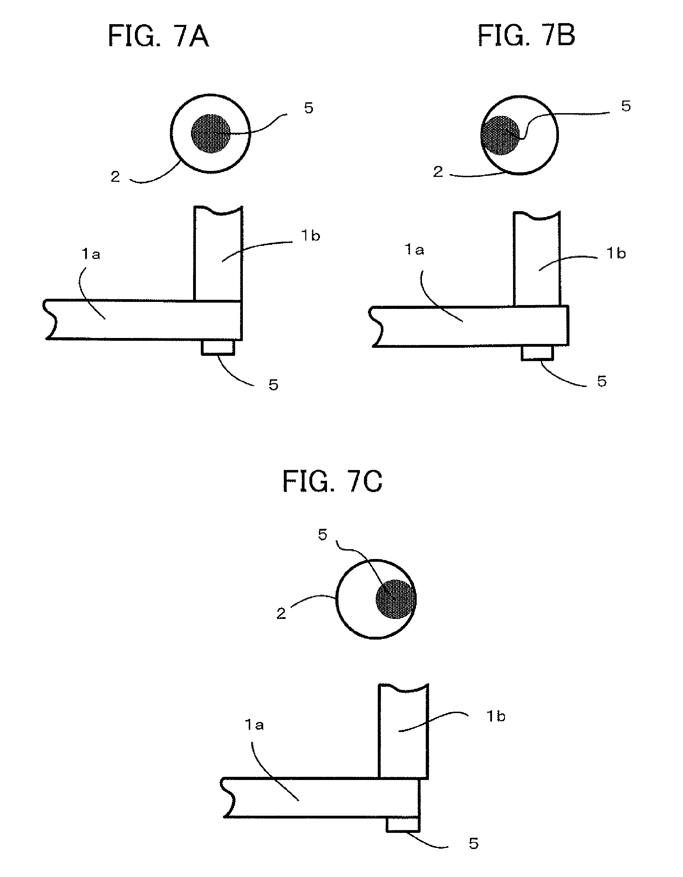

FIGS. 7A, 7B and 7C show examples in which the diameter of each bolt hole 2 in the plate member 1 that constitutes the slider 10 is made larger than that of each bolt 5 to be passed through the bolt hole 2 so that the positional relationships between the bolt holes 2 and the bolts 5 inserted into the bolt holes and engaged with the tapped holes 3 (see FIG. 1B) in the plate member 1 can be adjusted.

FIG. 7A shows an example in which one plate member 1 (plate member 1a) is positioned with respect to another plate member 1 (plate member 1b) so that the center of each bolt hole 2 in the plate member 1a is aligned with the central axis of the bolt 5 threadedly fitted in each corresponding tapped hole 3 in the plate member 1b, and the plate members 1a and 1b are fixed together by the bolt 5.

FIGS. 7B and 7C show examples in which the plate members 1a and 1b are positioned so that the center of each bolt hole 2 in the plate member 1a is deviated from the central axis of the bolt 5 threadedly fitted in each corresponding tapped hole 3 in the plate member 1b on one side or the other with respect to the width direction of the plate member 1a, and the plate members 1a and 1b are fixed together by the bolt 5.

According to this arrangement, if the bolt holes 2 or the tapped holes 3 in the plate members 1 are dislocated, the flat surfaces 6 of the plate members 1 can be brought into close contact with the bearing guide 20 under no pressure by adjusting the positional relationships between the bolts 5 on the plate member 1b and the bolt holes 2 in the plate member 1a. Thus, the box-like slider 10 can be formed by joining the plate members 1 with the bolts 5 in such a manner that the flat surfaces 6 of the plate members 1 are kept in close contact with the bearing guide 20.

If the bolt holes 2 and the tapped holes 3 can be formed individually in accurate positions such that the slider 10 can be formed with the plate members 1 and the bearing guide 20 in close contact with one another at a temperature at which the fluid bearing is assembled, it is unnecessary to adjust the positional relationships between the bolts 5 and the bolt holes 2 by making the diameter of each bolt hole 2 in each plate member 1 larger than that of each bolt 5, as shown in FIGS. 7A and 7B.

In order to prevent the fluid bearing structure according to the present invention from being broken by changes in the temperature environment, moreover, the measuring device or the working machine having the fluid bearing structure may be provided with a temperature regulator, such as a heater or a cooler.

## Claims

1. A fluid bearing structure comprising a bearing guide and a slider, wherein
the slider includes four square plate members each having a flat surface and end surfaces perpendicular thereto,
each of the plate members has two or more bolt holes formed near and along one side thereof and tapped holes formed in an end surface thereof on the other side opposite to the one side, corresponding to the bolt holes, individually,
the four plate members are coupled together to form a box-like structure by bolts which are passed individually through the bolt holes in one of the plate members so that the respective distal ends of the bolts are threadedly engaged with the tapped holes in another plate member, and
the bearing guide is passed through the respective inner surfaces of the four plate members in the shape of the box-like structure which serve as bearing surfaces of a fluid bearing,
the bearing guide and the slider are formed individually of materials with different thermal expansion coefficients, and the fluid bearing structure is assembled with the four plate members individually in close contact with the bearing guide, that is, with a bearing clearance between the guide and the slider reduced to zero, at a temperature different from a temperature at which the fluid bearing is used, thereby giving the fluid bearing structure thus assembled a bearing clearance of a size corresponding to a temperature difference between the environmental temperature at which the fluid bearing is used and the temperature at which the fluid bearing is assembled.

2. The fluid bearing structure according to claim 1, wherein the diameter of the bolt holes is made larger than that of the bolts to be engaged with the tapped holes so that positional relationships between the bolt holes in the one plate member and the tapped holes in the other plate member are adjustable, whereby the fluid bearing structure is configured to be assembled with the four plate members individually in close contact with the bearing guide.

3. The fluid bearing structure according to claim 1, wherein the bearing surfaces of the fluid bearing are configured so that a cross section perpendicular to a driving direction is shaped like a near square or parts of a near square.

4. A method for assembling a fluid bearing structure which includes a bearing guide and a slider, comprising:
a step of selecting materials with different thermal expansion coefficients for the bearing guide and the slider and bringing the slider into close contact with the bearing guide in a first temperature environment, thereby assembling the fluid bearing structure with a zero bearing clearance between the guide and the slider; and
a step of placing the assembled fluid bearing structure in a second temperature environment different from the first temperature environment, thereby adjusting the resulting bearing clearance to a size based on a difference between the first and second temperatures, and using the fluid bearing structure with the adjusted bearing clearance in the second temperature environment.

5. An adjustment method for a bearing clearance of a fluid bearing, comprising:
bringing a slider with a predetermined shape, size, and material into close contact with a bearing guide with a predetermined shape, size, and material in a set temperature environment, thereby assembling a fluid bearing structure with a zero bearing clearance between the bearing guide and the slider, and then obtaining, as functions of temperature differences from the set temperature, the respective sizes of bearing clearances generated when the assembled fluid bearing structure is placed in various temperature environments different from the set temperature; and
actually using the fluid bearing structure in an environment of temperature having a temperature difference corresponding to a desired bearing clearance, from the set temperature, with reference to the obtained functions, in order to obtain the desired clearance, or assembling the fluid bearing structure with the zero bearing clearance in an environment of temperature having a temperature difference corresponding to a desired bearing clearance, from the temperature at which the fluid bearing structure is to be used.

6. The adjustment method for a bearing clearance of a fluid bearing according to claim 5, wherein the slider is formed by coupling four plate members together, and a joint structure of the plate members is configured to allow the size and shape of the cross section of an internal space defined when the four plate members are coupled together to vary within a predetermined range.
